# EUROPEAN PATENT SPECIFICATION

(11) **EP 3 669 468 B1**
(45) Date of publication and mention of the grant of the patent: **25.11.2026**
(21) Application number: 18752517.5
(22) Date of filing: 16.08.2018
(51) Int. Cl.: H04B 7/06

(54) **RECEIVING DEVICE AND TRANSMISSION DEVICE FOR WIRELESS COMMUNICATION**
EMPFANGSVORRICHTUNG UND ÜBERTRAGUNGSVORRICHTUNG FÜR DRAHTLOSE KOMMUNIKATION
DISPOSITIF DE RÉCEPTION ET DISPOSITIF DE TRANSMISSION POUR LA COMMUNICATION SANS FIL

(30) Priority: 16.08.2017 EP 17186523; 10.01.2018 EP 18151038
(43) Date of publication of application: 24.06.2020
(73) Proprietor: Sony Group Corporation, Tokyo 108-0075 (JP); Sony Europe Limited, Weybridge, Surrey KT13 0XW (GB)
(72) Inventor: FELLHAUER, Felix, 70569 Stuttgart (DE); HANDTE, Thomas, 70327 Stuttgart (DE); CIOCHINA, Dana, 70327 Stuttgart (DE); LOGHIN, Nabil Sven, 70327 Stuttgart (DE)
(74) Representative: Witte, Weller & Partner Patentanwälte mbB
(86) International application number: PCT/EP2018/072260
(87) International publication number: WO 2019/034746

(56) References cited:
- US-A1- 2014 348 097
- US-A1- 2015 289 147
- US-A1- 2017 079 027
- US-B1- 7 676 007

## Description

### BACKGROUND

### FIELD OF THE DISCLOSURE

The present disclosure relates to a receiving device and method and to a transmission device and method for use in a wireless OFDM communication system.

### DESCRIPTION OF RELATED ART

Transmit beamforming is used in wireless OFDM communication systems. In order to make use of the improved performance by transmit beamforming, beamforming information generated at the receiver is fed back to the transmitter. For this purpose the same communication channel (e.g. at a lower data rate and in inverse direction) as for data communication or a different channel may be used. These feedback channels usually are restricted to low data rates compared to the communication channel in forward direction, which is formed through beamforming and which is used for data communication. Further, feedback of beamforming information is generally performed repeatedly if the channel changes. Hence, there is a need to keep the feedback overhead as small as possible.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly or impliedly admitted as prior art against the present disclosure.

US 7,676,007 B1 discloses that transmit beamforming with receive combining uses the significant diversity provided by multiple-input multiple-output (MIMO) systems, and the use of orthogonal frequency division multiplexing (OFDM) enables low complexity implementation of this scheme over frequency selective MIMO channels. Optimal beamforming uses channel state information in the form of the beamforming vectors corresponding to all the OFDM subcarriers. In non-reciprocal channels, this information should be conveyed back to the transmitter. To reduce the amount of feedback information, transmit beamforming combines limited feedback and beamformer interpolation. In this architecture, the receiver sends back a fraction of information about the beamforming vectors to the transmitter, and the transmitter computes the beamforming vectors for all subcarriers through interpolation of the conveyed beamforming vectors. Since a beamforming vector is phase invariant and has unit norm, a linear spherical interpolator uses additional parameters for phase rotation. These parameters are determined at the receiver in the sense of maximizing the minimum channel gain or capacity. The interpolator maybe combined with beamformer quantization.

Further prior art can be found in US 2017/0079027 A1, US 2015/0289147 A1 and US 2014/0348097 A1.

### SUMMARY

It is an object to provide a receiving device and method which enables feedback of beamforming information with less overhead. It is a further object to provide a corresponding transmission device and method as well as a corresponding computer program and a non-transitory computer-readable recording medium for implementing said methods.

According to an aspect there is provided a receiving device for use in a wireless OFDM communication system, said receiving device comprising:
- two or more receive antennas for receiving OFDM signals received over a channel from a transmission device having two or more transmit antennas and applying transmit beamforming, and
- circuitry configured to
   - perform channel estimation to estimate the channel,
   - generate transmit beamforming information based on the channel estimation, said transmit beamforming information comprising beamforming information per subcarrier or time domain tap,
   - determine a reduced set of transmit beamforming information from said transmit beamforming information, wherein said reduced set comprises beamforming information for a reduced set of subcarriers in the frequency domain or for a reduced set of taps in the time domain, wherein the subcarriers of said reduced set or the taps of said reduced set are determined based on an error criterion, and
   - feed back, to the transmission device, the reduced set of transmit beamforming information, a grouping field and a subcarriers / taps field, wherein the grouping field comprises two bits, wherein the highest value of the two bits indicates dynamic grouping in which case the number of subcarriers is specified by the subcarriers / taps field and wherein each of the other values of the two bits indicates a different number of subcarriers to be grouped into one.

According to a further aspect there is provided a transmission device for use in a wireless OFDM communication system, said transmission device comprising:
- two or more transmit antennas for transmitting OFDM signals over a channel to a receiving device having two or more receive antennas, and
- circuitry configured to
   - receive, from the receiving device, a reduced set of transmit beamforming information, a grouping field and a subcarriers / taps field, wherein the grouping field comprises two bits, wherein the highest value of the two bits indicates dynamic grouping in which case the number of subcarriers is specified by the subcarriers / taps field and wherein each of the other values of the two bits indicates a different number of subcarriers to be grouped into one, and wherein said reduced set comprises beamforming information for a reduced set of subcarriers in the frequency domain or for a reduced set of taps in the time domain, wherein the subcarriers of said reduced set or the taps of said reduced set are determined based on an error criterion,
   - reconstruct transmit beamforming information from the received reduced set of transmit beamforming information, and
   - apply transmit beamforming by use of the reconstructed transmit beamforming information.

According to still further aspects a computer program comprising program means for causing a computer to carry out the steps of the method disclosed herein, when said computer program is carried out on a computer, as well as a non-transitory computer-readable recording medium that stores therein a computer program product, which, when executed by a processor, causes the method disclosed herein to be performed are provided.

Embodiments are defined in the dependent claims. It shall be understood that the disclosed methods, the disclosed computer program and the disclosed computer-readable recording medium have similar and/or identical further embodiments as the claimed device and as defined in the dependent claims and/or disclosed herein.

One of the aspects of the disclosure is to compress the beamforming information, e.g. beamforming matrices, by exploiting their characteristics in the frequency (subcarrier) domain or in the time (tap) domain. Thus, not the whole beamforming information, e.g. all beamforming matrices for all subcarriers or all taps are fed back by the receiving device to the transmission device, but only a reduced set of beamforming information for a reduced set of subcarriers or taps. This strongly reduces the overhead of the required feedback signaling to the transmission device.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:
- Fig. 1: shows a schematic diagram of the general layout of a transmission device,
- Fig. 2: shows a schematic diagram of the general layout of a receiving device,
- Fig. 3: shows a schematic diagram of a wireless communication system according to the present disclosure illustrating the problem dealt with by the present disclosure,
- Fig. 4: shows a schematic diagram of a wireless communication system according to the present disclosure including simplified diagrams of a transmission device and a receiving device according to the present disclosure,
- Fig. 5: shows diagrams illustrating a complete set of transmit beamforming information and a reduced set of transmit beamforming information,
- Fig. 6: shows a flowchart of an implementation for compressing transmit beamforming information,
- Fig. 7: shows a flowchart of another implementation for compressing transmit beamforming information,
- Fig. 8: shows a diagram of an exemplary embodiment of a Beamforming Feedback Control field,
- Fig. 9: shows a diagram of another implementation of a Beamforming Feedback Control field,
- Fig. 10: shows a schematic diagram of a reconstruction unit of the transmission device shown in Fig. 4, and
- Fig. 11: shows a diagram of an approximated function and a reconstructed function.

### DETAILED DESCRIPTION OF THE EMBODIMENTS

In many situations, wireless communication systems can obtain higher communication rates by making use of multiple transmit antennas, also known as MIMO (multiple-input-multiple-output) if multiple antennas are available at the receiver side or MISO (multiple-input-single-output) if there is only a single antenna available at the receiver side. As the channels between multiple antennas naturally introduce interference between the transmit signals, this interference has to be considered.

The method of doing so is in general called transmit beamforming and necessitates that both, transmitter and receiver agree on the methods to be used and further exchange some information in order to do so. This type of information is usually named beamforming feedback (FB) information.

Mathematically, one favorable solution of mitigating the interference between multiple transmit signals can be formulated as follows: $H = {UDV}^{H}$ where **H** of dimensions (*Nᵣ* × *Nₜ*) describes a channel between a TX using *Nₜ* antennas and a receiver using *Nᵣ* antennas and (.)^{H} denotes the Hermitian operator. **D** is a diagonal matrix of dimensions (*Nₛ* × *Nₛ*) with *N_{S} = min*(*Nₜ, Nᵣ*), which corresponds to the number of independent streams that can be transmitted from the transmitter (TX) to the receiver (RX). It might also be beneficial to transmit less streams than possible using *N*_{*s*,used} < *N_{S}*. Both matrices **V** and **U** can be used together in order to form the diagonal matrix **D** out of **H:** $D = {U}^{H} H V$

To find matrices **U** of dimensions (*Nᵣ* × *N_{S,used}*) and **V** of dimension (*Nₜ* × *N*_{*S*,used}) for a known **H** there exist efficient methods like singular value decomposition (SVD). The channel matrix **H** needs to be estimated prior the decomposition by the RX for example based on respective pilot sequences. The equation above implies that the transmitter precodes its transmit data with matrix **V,** whereas the receiver applies **U**^{H} for reception or equalization.

Often the described method to use MIMO for communications is used jointly with orthogonal frequency-division multiplexing (OFDM), which is a method to encode digital data on multiple carrier frequencies. The signals on each of the resulting ***N_{sub}*** sub-carriers (or tones) then can be treated independently due to their orthogonality. Furthermore, the subcarriers can be chosen such that their bandwidth is very narrow and thus the respective channels can be assumed to be constant in frequency domain (narrowband assumption). The full OFDM channel for a MIMO system can thus be described by a three-dimensional matrix **H** of dimensions (***k*** × ***Nₜ*** × ***Nᵣ***) where ***k*** describes the subcarrier index in a range of ***k*** = **1 ... *N_{sub}***. Especially in wideband communication channels, such as the channels in the 60GHz bands for mmWave communication, the number of subcarriers ***N_{sub}*** can be quite large, which results in large feedback overhead. Therefore, methods are required to reduce this overhead as much as possible.

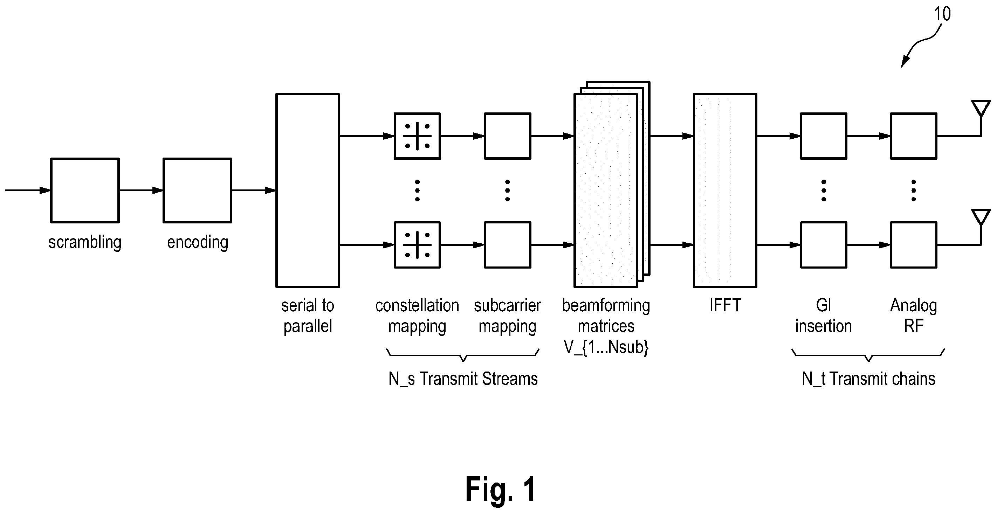

Fig. 1 shows a schematic diagram of the general layout of a transmission device 10 of an OFDM-MIMO system. The transmit data is first scrambled, encoded and then split up into ***N_{S}*** transmit streams. These streams are then mapped to transmit symbols and further mapped to OFDM subcarriers. In order to perform transmit beamforming, the transmitter needs to have knowledge about the beamforming matrices **V** for each subcarrier.

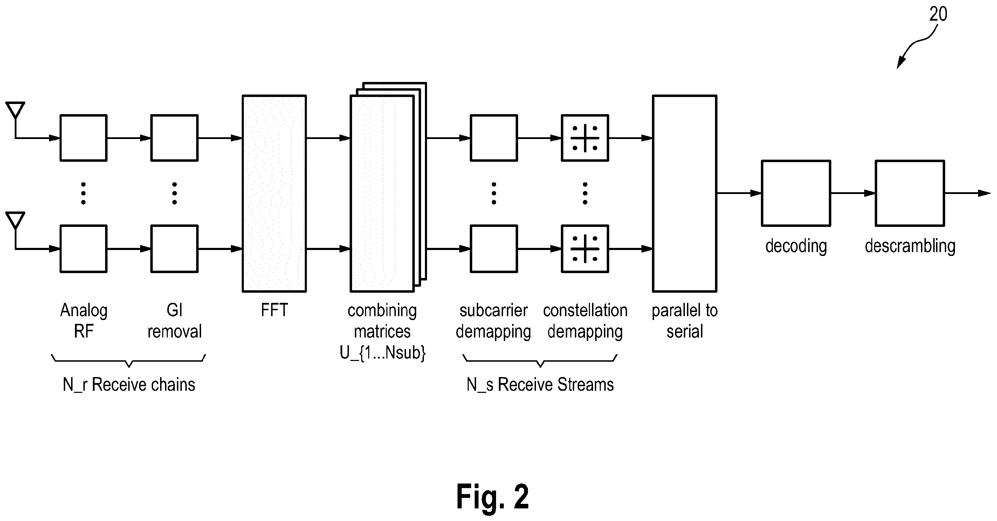

Fig. 2 shows a schematic diagram of the general layout of a receiving device 20 of an OFDM-MIMO system. After receiving the signals for all antennas in the time domain, the signals are transformed into the frequency domain and then combined using the combining matrix **U.**

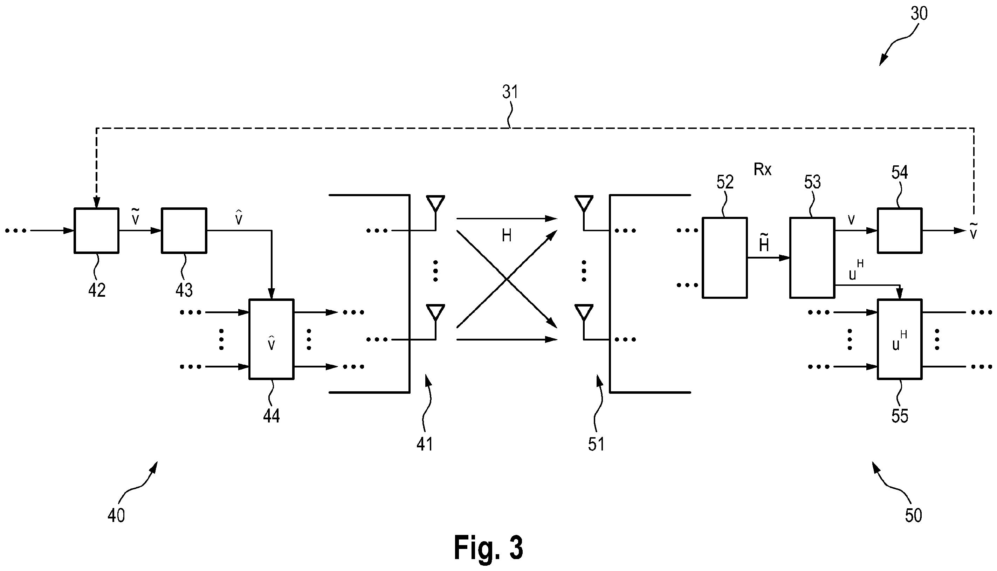

In order to make use of the improved performance by transmit beamforming, the beamforming information has to be fed back to the transmitter. Therefore the same communication channel (at a lower rate and in inverse direction) as for data communication may be used, but also a different channel can be used. This is illustrated in Fig. 3 showing a schematic diagram of a wireless communication system 30 illustrating the problem dealt with by the present disclosure. The system 30 comprises a transmission device 40 and a receiving device 50 according to the present disclosure, of which only essential elements are shown.

The receiving device (RX) 50 comprises two (or more) receive antennas 51, a channel estimation unit 52 for performing channel estimation, a channel decomposition unit 53 for decomposition to find matrices **U** and **V,** a compression unit 54 for compressing the matrix **V** into a reduced set of transmit beamforming information **Ṽ** (i.e. a compressed version of **V**) and a receive beamforming unit 55 using the matrix **U^{H}** or some other receiver strategy such as MMSE (Minimum Mean Square Error) or Zero-Forcing (ZF). The transmission device (TX) 40 comprises two (or more) transmit antennas 41, a receiving unit 42 for receiving the reduced beamforming information **Ṽ** transmitted by the receiving device 50 via the feedback channel 31, a reconstruction unit 43 for reconstructing the complete transmit beamforming information and a transmit beamforming unit 44 for applying beamforming information **V̂** (reconstructed version of **V**) that is reconstructed from reduced beamforming information **Ṽ** for each subcarrier. It should be noted, that receiving device 50 computes **U** and **V,** but only applies **U,** or even none of them (in case of MMSE- or ZF-Receiver).

As these feedback channels usually are restricted to low data rates compared to the beam-formed channel in forward direction (TX to RX) and feedback of beamforming information has to be performed repeatedly if the channel changes, it is advisable to keep the feedback overhead as small as possible and therefore compress the feedback information (at least partly; the feedback information may e.g. include SNR information of the transmitted streams which cannot or needs not be compressed or linearly quantized).

In order to keep the feedback overhead as low as possible there have been methods proposed that compress the beamforming matrices for each subcarrier independently. A simple method discretizes the complex valued entries of beamforming matrix **V*ₖ*** for ***k***-th subcarrier by real and imaginary parts with an appropriate quantization. The quantization resolution and/or spacing can be selected in order to adjust the amount of feedback information, resulting in a total number of real valued variables to be fed back to the TX for each transmit beamforming matrix:$N = 2 \times {N}_{t} \times {N}_{S , used} .$

Another method exploits the unitary property of **V:** Before the beamforming matrix for each subcarrier is fed back to the TX, each matrix is decomposed using the so called "Givens Rotation". After applying this method, the beamforming matrix for a single subcarrier can be represented by a set of ${N}_{φ} = \left({N}_{t}\times \left({N}_{t}+1\right)/2-{N}_{t}\right) φ - angles defined in the range \left[0, 2π\right]$ and ${N}_{θ} = \left({N}_{t}\times \left({N}_{t}-1\right)/2\right) θ - angles defined in the range \left[0,π/2\right] .$

This representation requires less feedback overhead compared to straight-forward discretization of real and imaginary parts of **V.** Further the resulting angles can be quantized with different resolutions in order to adjust the amount of feedback overhead. For a simpler notation the notation of **Ṽ** for a compressed beamforming matrix is used at the transmitter side, which can be the outcome of any method for compression. After feedback of the matrix **Ṽ**, the transmitter has to reconstruct the beamforming marices in order to apply them on the transmit signals first. The outcome of this reconstruction process is a beamforming matrix for each subcarrier depicted as **V.** The transmitter will not be able to reconstruct the ideal beamforming matrix **V** after the compression was applied which will result in reduction of the achievable data rates.

In addition to adjust the amount of feedback information to the properties of the underlying communication channel, feedback information of multiple subcarriers can be grouped together. This can be reached by averaging beamforming matrices of multiple adjacent subcarriers and feedback of the resulting averaged matrix supplemented by the used group width. The current standard IEEE 802.11ac only allows two user equidistant group widths and does not specify the method to be used for combining multiple adjacent**V-**matrices.

In addition to the known methods for feedback compression, it is proposed in this disclosure to further compress beamforming matrices by exploiting their characteristics in the remaining dimension, namely in the frequency (subcarrier) domain or in the time (tap) domain. This type of compression can be performed in addition to the methods already defined in the legacy standards (like IEEE 802.11ac), wherein the transmit beamforming matrices for each subcarrier are treated independently (excepted for the grouping feature, which is restricted to grouping of a static number of adjacent subcarriers into single beamforming matrix).

One of the ideas of the disclosure is to include only specific transmit beamforming information (e.g. beamforming matrices), also called a reduced set of transmit beamforming information, in the feedback information (so-called support vectors) and skip entries that do not exceed a certain error threshold if skipped. Said error threshold represents an error criterion used according to the present disclosure to select for which subcarriers or taps feedback information shall be included in the feedback information.

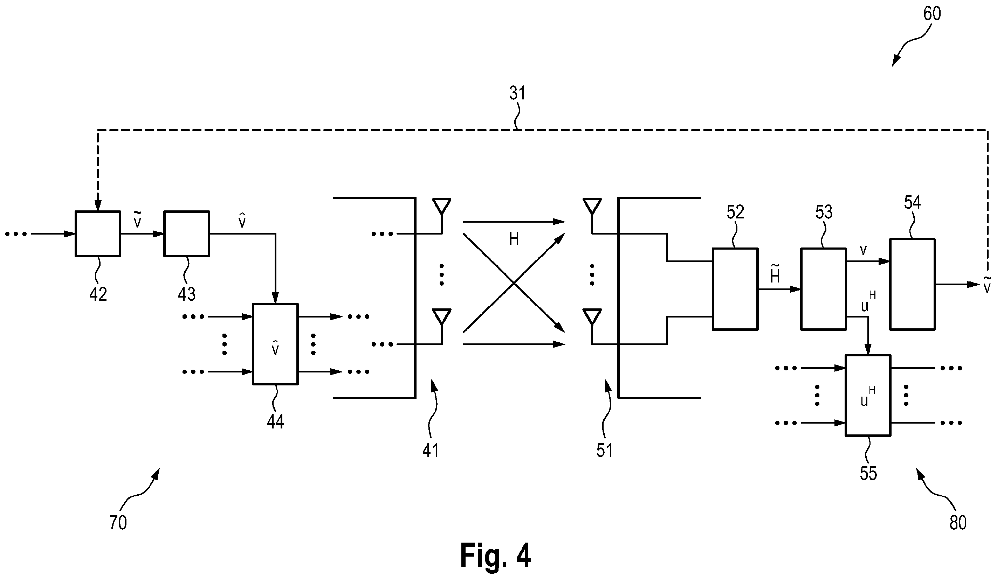

Fig. 4 shows a schematic diagram of a corresponding wireless communication system 60 according to the present disclosure including simplified diagrams of a transmission device 70 and a receiving device 80 according to the present disclosure. The receiving device 80 comprises the same elements as the receiving device 50 shown in Fig. 3. However, the compression unit 54 operates differently in this embodiment, as will be explained below. The transmission device 70 comprises the two (or more) transmit antennas 41, the receiving unit 42 for receiving the reduced set of transmit beamforming information transmitted by the receiving device 80 via the feedback channel 31, the reconstruction unit 43 for reconstructing the complete transmit beamforming information and the transmit beamforming unit 44, which also operates differently in this embodiment, for applying transmit beamforming using the reconstructed transmit beamforming information.

According to the present disclosure the following modifications in the implementation of the transmission device and the receiving device may be applied. On the RX-side, an extension of the compression method is made to perform compression of transmit beamforming information over an additional dimension. The feedback information includes an indicator that compression is performed using the additional dimension and additional information where in frequency or time domain the fed back beamforming information has to be applied. On the TX side the reconstruction method of the full set of beamforming is adapted to the compression method applied at the RX side respectively.

When observing the characteristics of transmit beamforming matrices for 60GHz Hybrid-MIMO channels in the baseband, especially after matrix decomposition using Givens-Rotation has been applied, it can be observed that many of the resulting numeric values (Givens angles) evolve linearly over frequency/subcarrier indices. After applying Givens-decomposition on these matrices, each matrix can be represented by ***I*** = ***N_{φ}** + **N_{ψ}*** (with ${N}_{φ} = \left({N}_{r}\times \frac{{N}_{r} + 1}{2}-{N}_{r}\right)$ and ${N}_{ψ} = \left({N}_{r}\times \frac{{N}_{r} - 1}{2}\right)$) real-valued angles, instead of ***Nₜ*** × ***N_{S,used}*** complex numbers (or **2** × ***Nₜ*** × ***N_{S,used}*** real valued numbers). These values are treated as multiple discrete functions ***fᵢ***[***k***] (with ***i*** = **1** ... ***I***) depending on the subcarrier index ***k***. Here, the function index ***i*** can reflect the entries of a **V**-matrix directly or respective angles after transformation using Givens-Rotation / Gauss-Jordan-Decomposition or other compression methods that treat **V** for each subcarrier independently.

The number of approximated functions depends on the compression method that is applied prior approximation. If no compression is applied ***I*** = **2** × ***Nₜ*** × ***N_{S,used}*** would hold (as real and imaginary parts of each entry **of V** have to be approximated). If Givens-Rotation was applied, ***I** = **N_{φ}** + **N_{θ}*** would hold.

Then, a vector of support positions in time/frequency domain ***sₐₚₚ*** ⊂ ***S_{sub}*** with length ***J*** is defined containing a reduced number of all available positions ***S_{sub}*** = {**0, 1,** ... ***N_{sub}** -* **1**}. The entries of ***sₐₚₚ*** are chosen such that an accumulated error threshold in a segment (between previous support position ***sₐₚₚ***[***j** -* **1**] and support position ***sₐₚₚ***[***j***]) defined as ${Δ}_{i , j} = {\sum }_{n = {s}_{app} \left[j-1\right]}^{{s}_{app} \left[j\right]} {\left|{f}_{i}\left[n\right]-{f}_{i , approx}\left[n\right]\right|}^{2}$ does not exceed the predefined error threshold of **Δ_{*i*,max}** for any of the ***I*** functions (error threshold may remain constant for all segments ***j*** or may be derived dynamically for each segment and/or channel). Each entry of ***sₐₚₚ*** then indicates positions for each of the ***I*** functions that should be included in the reduced feedback, even if only one of the defined threshold values is reached.

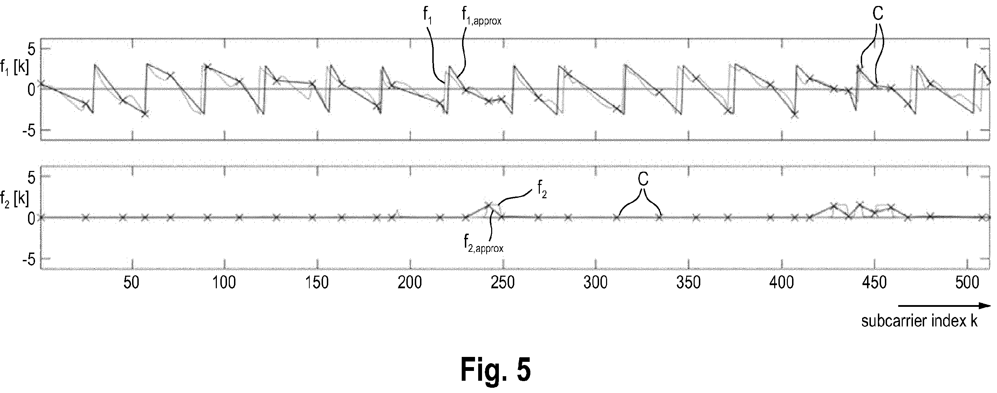

In between these support positions different methods of interpolation or approximation to derive ***f*_{*i,*approx}** can be applied. The simplest case of this method can be realized by using linear interpolation. Then each of the initial functions ***fᵢ***[***k***] are segment-wise interpolated using linear functions. An example of the outcome of this proœdure is shown in Fig. 5 depicting diagrams illustrating a complete set of transmit beamforming information and a reduced set of transmit beamforming information.

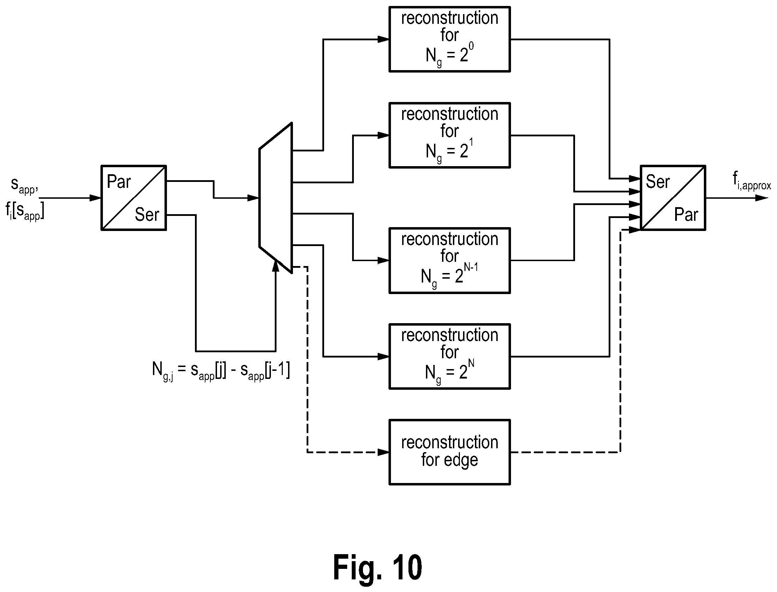

To simplify implementations, further constraints can be imposed on the criterion proposed above. One example is only allowing predefined distances between the subcarriers. Based on this the above described criterion for **Δ*_{i,j}*** changes as follows: $find {s}_{app} \left[j\right] s . th . {\sum }_{n = {s}_{app} \left[j-1\right]}^{{s}_{app} \left[j\right]} {\left|{f}_{i}\left[n\right]-{f}_{i , approx}\left[n\right]\right|}^{2} \leq {Δ}_{max}$ and $\left|{s}_{app}\left[j\right]-{s}_{app}\left[j-1\right]\right| ∈ {S}_{FB}$ where *S_{FB}* contains values that are predefined e.g., *S_{FB} =* {1, 2, 4,.. 2*^{N}*}. The advantage is that in this case a bank of fixed size linear interpolators can be used to facilitate the reconstruction of the digital beamformers at the transmitter as shown in Fig. 10. Fig. 10 particularly shows a schematic diagram of a device to reconstruct *f_{i,approx}* by using a bank of reconstructors for fixed group width and *N_{g,j}* ∈ *S_{FB}*. This arrangement might be a component of a reconstruction unit 43 depicted in Fig. 4.

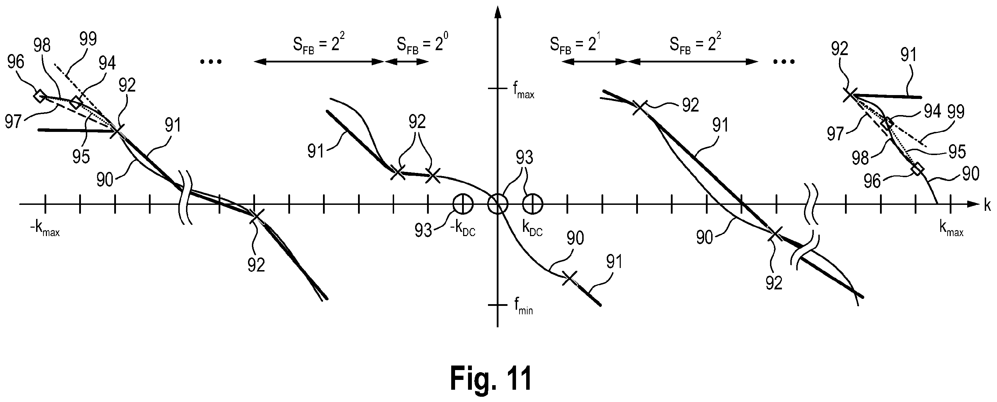

The application of this criterion should start from the subcarriers neighboring the DC (direct current, i.e., center) subcarriers and should be moving towards the channel edges. In this way it is ensured that DC subcarriers are not part of the subcarriers being fed back. This is illustrated in Fig. 11 as an example. Fig. 11 shows an approximation 90 of function ***f*₁**[***k***] with dynamic group widths from ***S_{FB}*** = {**2⁰**, **2¹**, ..., **2*^{N}***} , the reconstructed function 91 (***f*_{1*,approx*}**[***k***]) based on ***sₐₚₚ***[***j***] (crosses 92), see the above equation. DC subcarriers are excluded (as indicated by circles 93).

The condition can be relaxed at the channel edges in order to allow these to be part of the signaling and the transmitter to correctly reconstruct the pre-coders. Multiple options exist, as depicted in Fig. 11:
a. Include all leftover subcarriers with *S_{FB}* = 1 (see diamond 94 and dotted line 95 for resulting respective *f*_{1,*approx*});
b. Include only last subcarrier (see plus 96 and dashed line 97);
c. Do not include any further subcarriers, resulting in constant continuation of value (solid line 98) or slope (dash-dotted line 99).

Since subcarriers at the edge of a channel or corresponding to edges of channels being part of a bonded channel should be present, optionally a reconstruction unit with a size different than ***N_{g}*** can be present and this is marked with dashed line in Fig. 10.

A further constraint can be imposed on top of the option a. to ensure that ***sₐₚₚ***[***j***] does not belong to the set of indexes indicating the pilot positions.

Fig. 5 particularly shows a visualization of approximated ***I*** = **2** functions ***f*₁** and ***f*₂** over frequency (subcarrier index ***k***) using ***J*** = **34** « ***N_{sub}*** = **512** dynamically placed support positions (crosses C) resulting in approximations ***f*_{1,approx}** and ***f*_{2,approx}** , which reflect **V-**matrices of dimension (***Nₜ** =* **2** × ***Nₛ*** = **2**) that were first decomposed into two angles for each subcarrier using Givens-Rotation. The regression/interpolation methods can be used directly on angles obtained by Givens rotation matrices or can be applied on transformations of these, which take into account the fact that precoders are invariant to multiplications with a constant phase. Thus the **V**-matrices for a particular subcarrier can be multiplied prior to applying Givens rotations with constant phase term which may be chosen to compensate for an isolated variation in one of the angles e.g. as occurring on ***f*₂** in Fig 5 or to improve the linearization, e.g. by finding a multiplication phase factor for which the maximum error or the sum error of the linearization is the smallest.

The reduced set of subcarriers / taps, for which beamforming information is included in the reduced set of transmit beamforming information, thus comprises subcarriers / taps, where the distance between adjacent subcarriers / taps may be equal or unequal and may even be different for different pairs of adjacent subcarriers / taps, i.e. there may be a dynamic width in between adjacent subcarriers / taps.

Different kinds of compressed transmit beamforming information may be fed back from the receiving device to the transmission device according to embodiments of the present disclosure. Beamforming matrices may be compressed along the dimension of time or frequency, i.e. the feedback overhead may be reduced over the frequency-domain or the time-domain according to one of the following methods:
a. by differential signaling (between subcarriers), which means that beamforming matrices are signaled not absolutely, but with respect to some reference (e.g. preceding subcarrier / tap);
b. by grouping, which means that an averaging over multiple subcarriers is applied in order to reduce beamforming feedback information;
c. by linear/nonlinear interpolation or regression over groups (static width), as described above, but with a static (i.e. fixed for all channels) set of reduced support vectors ***sₐₚₚ***;
d. by linear/nonlinear interpolation or regression over dynamic groups, as described above;
e. by reduction of channel state information (CSI) in time domain; or
f. by reduction of **V** in time domain.

Further, alternatively or in addition, beamforming matrices may be compressed independently for each subcarrier. A single transmit beamforming matrix **V** may be compressed according to one of the following methods:
g. by linear quantization;
h. by decomposition using Givens-Rotation (as described above);
i. by decomposition using Gauss-Jordan-Elimination; or
j. by transforming Cartesian complex-valued entries of **V**-matrices in polar coordinates before quantization.

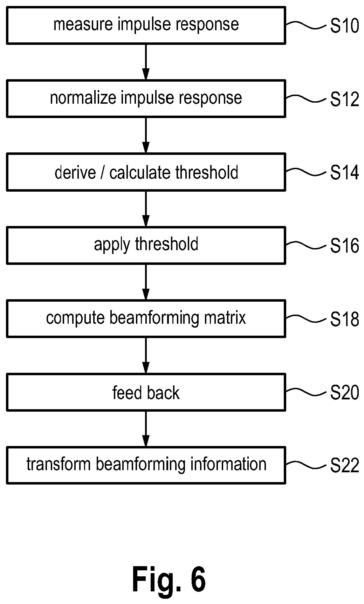

Fig. 6 shows a flowchart of a possible implementation of the embodiment in item e. above. In a first step S10 the impulse response is available in time-domain for each link, e.g. measure ***h_{i,j}***(***n***) with **1** ≤ ***i*** ≤ ***Nᵣ*** and **1** ≤ ***j*** ≤ ***Nₜ*.** In a second step S12 each impulse response is optionally normalized to its average power, i.e. ${{h}^{˜}}_{i , j} \left(n\right) = {h}_{i , j} \left(n\right) ⋅ \frac{1}{\sqrt{{\sum }_{n} {\left|{h}_{i , j}\left(n\right)\right|}^{2}}}$

In a third step S14 a predefined or derived threshold *α* is selected, which defines the minimum magnitude of a tap of each *h̃_{i,j}*(*n*) to be considered as significant. In a fourth step S16 a threshold is applied to each *h̃_{i,j}*(*n*) in order to extract a set of significant taps. The set of significant taps ${h}_{i , j}^{SIG}$ includes the complex-valued impulse response value and the respective time index *n^{SIG}*. In more detail, *n^{SIG}* is determined by evaluating |*h̃_{i,j}*(*n*₀)| for each *i* and *j* for fixed *n*₀. If any |*h̃_{i,j}*(*n*₀)| exceeds threshold *α*, the tap *n*₀ is considered to be significant and included to the set *n^{SIG}.* The associated significant impulse response taps for *n*₀ are given by *h̃_{i,j}*(*n*₀) and included to ${h}_{i , j}^{SIG}$.

In a fifth step S18 for each channel matrix ***H^{SIG}*** defined by ${h}_{i , j}^{SIG}$ for all ***i*** and ***j***, a beamforming matrix **V** (including an optional compression such as Givens rotation if applicable) is computed: ${V}^{SIG} = BF \left({h}_{i , j}^{SIG}\right) .$

Assuming that *n^{SIG}* contains S entries, S beamforming matrices *V^{SIG}* are computed from each ***H^{SIG}*.** In a sixth step S20 the elements in *n^{SIG}* and *V^{SIG}* are fed back to the transmitter, i.e. (*V^{SIG}, n^{SIG}*). In a seventh step S22 the transmitter transforms the received beamforming information in frequency domain by $V \left(ω\right) = {\sum }_{s = 1}^{S} {V}^{SIG} \left(s\right) ⋅ {e}^{- jωT ⋅ {n}^{SIG} \left(s\right)}$ where *T* denotes the tap spacing or sampling interval of the impulse response. As OFDM transmitters typically apply discrete Fourier transform, the above equation is evaluated at $ω = \frac{2 πk}{{N}_{sub}}$ only with *k* being the subcarrier index and ***N_{sub}*** the total number of subcarriers. It should be noted that depending on implementation the second step S12 may be omitted.

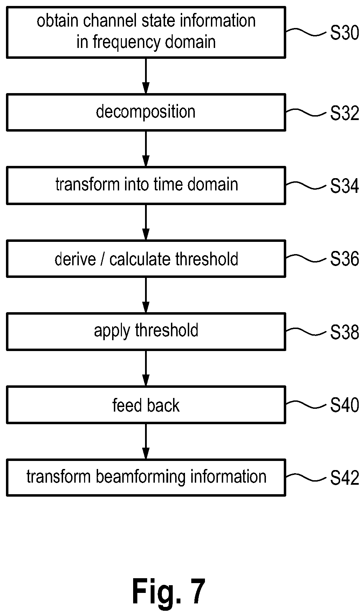

Fig. 7 shows a flowchart of a possible implementation of the embodiment in item f. above. In a first step S30 the channel state information (CSI) is obtained in frequency domain for each link and each subcarrier k, i.e. ${h}_{i , j}^{f} \left(k\right)$ with**1** ≤ ***i*** ≤ ***Nᵣ*** and**1** ≤ ***j*** ≤ ***Nₜ*** is measured (here matrices ***H^{t}*** /***V^{t}*** indicate representation in time domain, ***H^{f}***/***V^{f}*** in frequency domain with ***N_{S}*** = **min**(***Nₜ*,*Nᵣ***) and **1** ≤ ***v** ≤ **N_{S}***). In a second step S32 decomposition of ***H^{f}***(**k**) is performed to obtain ***V^{f}***(***k***) and **U*^{f}***(***k***) in frequency domain for each subcarrier ***k*.** Alternatively, the channel information may be obtained in time domain in the first step S30 then it has to be transformed into frequency domain first, before applying decomposition in second step S32.

In a third step S34 elements ${v}_{j , ν}^{f} \left(k\right)$ are transformed back to time domain to obtain elements ${v}_{j , ν}^{t} \left(n\right)$ for each tap ***n*.** In a fourth step S36 a predefined or specific threshold ***α*** is selected or derived, which defines the minimum magnitude of a tap of each ${v}_{j , ν}^{t} \left(n\right)$ to be considered as significant (this step can be described as cluster detection).

In a fifth step S38 this threshold is applied to each ${v}_{j , ν}^{t} \left(n\right)$ in order to extract a set of significant taps. The set of significant taps ${v}_{j , ν}^{SIG}$ consists of the complex-valued elements and the respective tap index ***n^{SIG}*** (it has to be noted that *n^{SIG}* is of a single dimension and thus ${v}_{j , ν}^{SIG}$ is a common set of taps for all elements). In more detail, ***n^{SIG}*** is determined by evaluating $\left|{v}_{j , ν}^{t}\left({n}_{0}\right)\right|$| for each ***j*** and ***v*** for fixed ***n*₀**. If any $\left|{v}_{j , ν}^{t}\left({n}_{0}\right)\right|$| exceeds threshold ***α***, the tap ***n*₀** is considered to be significant and included to the set ***n^{SIG}*.** The associated beamforming taps for ***n*₀** are given by ${v}_{j , ν}^{t} \left({n}_{0}\right)$ and included to ${v}_{j , ν}^{SIG}$. The threshold ***α*** might be pre-determined as a static value or may be derived dynamically by taking into account respective values of the transmit beamforming matrices (i.e. average channel power). This thresholding intends to include only relevant (with respect to achievable transmission rates) elements of the complete transmit beamforming information. In a sixth step S40 each significant taps set is fed back to the transmitter, i.e. ( ${v}_{j , ν}^{SIG}$, ***n^{SIG}***) for all ***j*** and ***v***. In a seventh step S42 the transmitter transforms the feedback information back into frequency domain and applies the resulting **V̂*^{f}_{j,v}***(***k***) for each subcarrier in order to perform transmit beamforming. The same method may be applied on Givens-Representations of **V*^{f}***-matrices. Then the additional step of Givens-Rotation may be included in step S32 and the inverse Givens-Rotation in step S42 respectively.

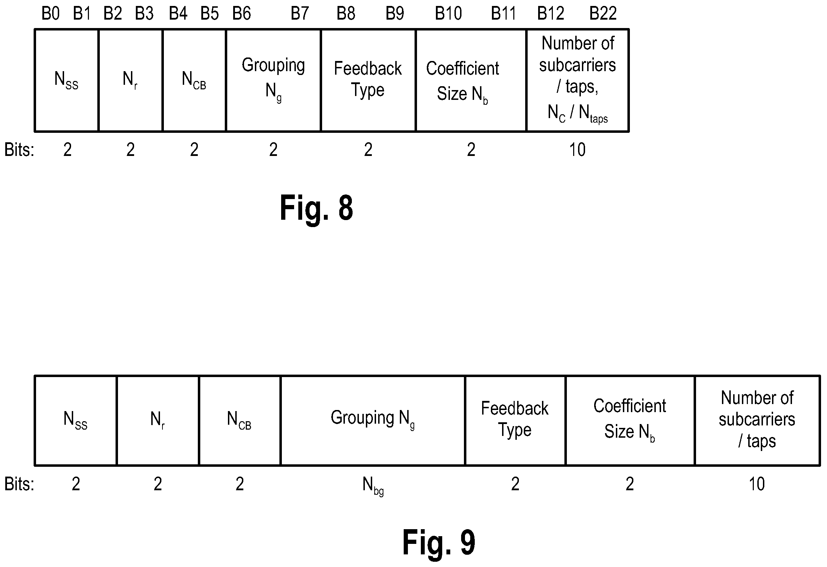

Fig. 8 shows a diagram of an exemplary embodiment of a Beamforming Feedback Control field, in particular of enhanced directional multi-gigabit (EDMG) Beamforming Feedback Control, which configures the EDMG Beamforming Feedback element as shown in Table 1 below.

Compression using Givens-Rotation can be obtained by finding: $D \left({1}_{i - 1} {e}^{{jφ}_{i , i}} … {e}^{{φ}_{{N}_{r} - 1 , i}} 1\right) = \left[\begin{matrix}{I}_{i - 1} & 0 & … & … & 0 \\ 0 & {e}^{{jφ}_{i , i}} & 0 & … & 0 \\ ⋮ & 0 & ⋱ & 0 & 0 \\ ⋮ & ⋮ & 0 & {e}^{{jφ}_{{N}_{r - 1 , i}}} & 0 \\ 0 & 0 & 0 & 0 & 1\end{matrix}\right]$ and ${G}_{li} \left(ψ\right) = \left[\begin{matrix}{I}_{i - 1} & 0 & 0 & 0 & 0 \\ 0 & cos \left(ψ\right) & 0 & sin \left(ψ\right) & 0 \\ 0 & 0 & {I}_{l - i - 1} & 0 & 0 \\ 0 & - sin \left(ψ\right) & 0 & cos \left(ψ\right) & 0 \\ 0 & 0 & 0 & 0 & {I}_{{N}_{r} - l}\end{matrix}\right]$ such that $V = \left[{\prod }_{i = 1}^{min \left({N}_{c},{N}_{r}-1\right)} \left[{D}_{i}\left({1}_{i - 1} {e}^{{jφ}_{i , i}}…{e}^{{jφ}_{{N}_{r} - 1 , i}} 1\right){\prod }_{l = i + 1}^{{N}_{r}} {G}_{li}^{T} \left({ψ}_{li}\right)\right]\right] {{I}^{˜}}_{{N}_{r} \times {N}_{c}} .$ with *Iₙ* depicting the (*n* × *n*)-Identity matrix.

The fields shown in Fig. 8 have the following meaning:
The Nss field indicates the number of columns in a beamforming feedback matrix minus one.

The Nr field indicates the number of rows in a beamforming feedback matrix minus one.

Th Ncb field indicates the number of 2.16 GHz channels, the measurement was made for minus one.

The Grouping field indicates the number of subcarriers to be grouped into one:
Set to 0 for no grouping -> *N_{g}* = 1
Set to 1 -> *N_{g}* = 2
Set to 2 -> *N_{g}* = 4
Set to 3 for dynamic group width -> Number of Elements is specified by Number of subcarriers / taps field.

The Feedback Type Field indicates which type of feedback is provided:
Set to 0 -> uncompressed feedback in frequency domain
Set to 1 -> compressed using Givens Rotation in frequency domain
Set to 2 -> uncompressed feedback in time domain
Set to 3 -> compressed feedback using Givens Rotation in time domain

The Coefficient Size field indicates the quantization resolution in bit of the elements of Beamforming Feedback Matrices ( ${b}_{ϕ} = \frac{{N}_{b}}{2}$ and ${b}_{ψ} = \frac{{N}_{b}}{2} + 2$ bit):
Set to 0 for *N_{b} =* 2 (*b_{ψ} =* 1, *b_{φ}* = 3, for compressed feedback modes)
Set to 2 for *N_{b} =* 6 (*b_{ψ} = 3, b_{φ}* = 5, for compressed feedback modes)
Set to 4 for *N_{b} =* 8 (*b_{ψ} =* 4, *b_{φ}* = 6, for compressed feedback modes).

The Number of subcarriers/taps field specifies the number of taps /subcarriers present in the report minus one (only relevant when dynamic group width is used).

Fig. 9 shows a schematic diagram of a device to reconstruct *f_{i,approx}* by using a bank of reconstructors for fixed group width and *N_{g,j}* ∈ *S_{FB}*. This arrangement might be a component of a reconstruction unit 43 as shown in Fig. 4. Optionally a reconstruction unit for subcarriers at the edge of channels or at the edge of channels being part of bonded channel which can have predefined values different than N_{g} can be present and marked as dashed. The Grouping field may alternatively comprise more than two bits to indicate the number of subcarriers to be grouped into one, as illustrated in Fig. 9:
Set to 0 to indicate *N_{g}* = 2
Set to 1 to indicate *N_{g}* = 4 ...
Set to *Nₗ* to indicate the largest grouping size *N_{g,max} =* 2*^{Nl}*+1,
Set to *Nₗ +* 1 (or to a value strictly larger than *Nₗ* and strictly smaller than 2^{(*Nbg*})) to indicate dynamic grouping. In this case, the specific indexes of the subcarriers in absolute or differential form are presented in the Tap / carrier index field. The indexes should be such that the difference between any two adjacent subcarriers, present within the feedback and for which the following conditions hold
- they are not edge subcarriers for any channel or bonded channel
- they are not adjacent to the DC (direct current) subcarriers
is one or corresponds to one of the groupings allowed and which are indicated by the grouping field. *N_{g,max}* can be chosen based on offline analysis of the channel characteristics and *N_{bg}* = ceil(log₂(*Nₗ* + 1)) represents the number of bits required. In more advanced implementations the difference between any two adjacent subcarriers present in the feedback and satisfying the two conditions above can be a power of 2 larger than the ones defined in the grouping field or a multiple or divisor of these.

**Table 1 - EDMG Beamforming Feedback element**

| **Field** | **Size** | | **Meaning** |
|---|---|---|---|
| Element ID | 8 bits | | |
| Length | 8 bits | | |
| SNR | SNR₁ | 8 bits | Average SNR in STA sending Report for space-time-stream 1 |
| | SNR₂ | 8 bits | Average SNR in STA sending Report for space-time-stream 2 |
| | ⋮ | | |
| | SNR*N_{SS}* | 8bits | Average SNR in STA sending Report for space-time-stream *N_{SS}* |
| Beamforming Feedback Matrix | Beamforming Feedback matrix for subcarrier *k = scidx*(0)/ for time domain tap #1 | *n*_{bit} bits | Beamforming feedback matrix with *n*_{bit} bits as in Table 3. Depicting transmit beamforming information in Time- of Frequency-Domain, depending on value of "Feedback Type" field in Fig. 8. |
| | Beamforming Feedback matrix for subcarrier *k = scidx*(1) / for time domain tap #2 | *n*_{bit} bits | |
| | ⋮ | ⋮ | |
| | Beamforming Feedback matrix for subcarrier *k = scidx*(*N_{C} -* 1) / for time domain tap #*N*ₜₐₚₛ | *n*_{bit} bits | |
| Tap Delay / Carrier Index | Relative Delay of Tap #1 / carrier index *stcidx*(0) | Implementation specific | Only present in dynamic grouping mode (Grouping set to 3) |
| | Relative Delay of Tap #2 / differential carrier index [*stcidx*(0) *- stcidx*(1)] | Implementation specific | Only present in dynamic grouping mode (Grouping set to 3) |
| | ⋮ | ⋮ | |
| | Relative Delay of Tap #*N*ₜₐₚₛ - 1 / differential carrier index [*stcidx*(*N_{C} -* 1) *- stcidx*(*N_{C}*)] | Implementation specific | Only present in dynamic grouping mode (Grouping set to 3) |

With respect to the Beamforming Feedback Matrix it is noted that the order of angles for compressed feedback modes is defined in Table 4. For Feedback in non-compressed feedback mode, matrix elements might be vectorized and quantized using *N_{b}* bits each for real- and imaginary parts and then placed one after each other (Re, Im, ...).

Naturally, the values in the Carrier Index field can be either relative indexes as presented or absolute values i.e., *stcidx*(0), *stcidx*(1), ...

When the Aggregation field indicated that the feedback should be for an aggregated channel, the indexes within the Carrier Index field are ordered such thatfirst the subcarrier index set corresponding to the lower 2.16 or 4.62 channel are indicated. These are then followed by the subcarrier indexes of the higher 2.16 or 4.62 channel, such that the total number of subcarriers feedback corresponds to the indication within the control field.

Alternatively, for the aggregation case the number of subcarriers within each of the channel can be signaled, in which case individual beamforming information and carrier index information can be sent for each channel.

**Table 2 - Subcarriers for which a Compressed Beamforming Feedback Matrix subfield is sent back**

| *N_{CB}* | Channel Number | *N_{G}* | *N_{C}* | Carriers *scidx*(0), *scidx*(1), ..., *scidx*(*N_{C} -* 1) for which matrices are sent |
|---|---|---|---|---|
| 1 | 1...8 | 1 | 336+16 | All data and pilot tones indices, from lowest frequency to highest frequency. |
| | | 2 | | All data and pilot tones indices, from lowest frequency to highest frequency with every second entry skipped. |
| | | 4 | | Every fourth data and pilot tones indices, from lowest frequency to highest. |
| 2 | 9...15 | 1 | 734+36 | All data and pilot tones indices, from lowest frequency to highest frequency. |
| | | 2 | | All data and pilot tones indices, from lowest frequency to highest frequency with every second entry skipped. |
| | | 4 | | Every fourth data and pilot tones indices, from lowest frequency to highest. |
| 3 | 17...22 | 1 | 1134+56 | All data and pilot tones indices, from lowest frequency to highest frequency. |
| | | 2 | | All data and pilot tones indices, from lowest frequency to highest frequency with every second entry skipped. |
| | | 4 | | Every fourth data and pilot tones indices, from lowest frequency to highest. |
| 4 | 25...29 | 1 | 1532+76 | All data and pilot tones indices, from lowest frequency to highest frequency. |
| | | 2 | | All data and pilot tones indices, from lowest frequency to highest frequency with every second entry skipped. |
| | | 4 | | Every fourth data and pilot tones indices, from lowest frequency to highest. |

**Table 3 - Size of Beamforming Feedback matrix**

| **Feedback Type** | **Coefficient Size** | **Size (bits)** |
|---|---|---|
| Non-compressed | *n*_{bit} | 2 × *N_{b}* × *N_{SS}* × *Nᵣ* |
| Compressed | *n*_{bit} | *Nₐ* × (*b_{ψ}* + *b_{φ}*)/2, with ${N}_{φ} = \left({N}_{r}\times \frac{{N}_{r} + 1}{2}-{N}_{r}\right)$ and |
| | | ${N}_{ψ} = \left({N}_{r}\times \frac{{N}_{r} - 1}{2}\right) , {N}_{a} = {N}_{ψ} + {N}_{ϕ}$ |

**Table 4 - Order of angles in the "Beamforming Feedback Matrix" field with angles from Givens-Rotation as described above.**

| **Size of V (*Nᵣ*** × ***N_{c}*)** | **Number of angles (*Nₐ*)** | **The order of angles in the "Beamforming Feedback Matrix" field in Table 1** |
|---|---|---|
| (2 × 1) | 2 | *φ*₁₁, *ψ*₂₁ |
| (2 × 2) | 2 | *φ*₁₁, *ψ*₂₁ |
| (3 × 1) | 4 | *φ*₁₁, *φ*₂₁, *ψ*₂₁, *ψ*₃₁ |
| (3 × 2) | 6 | *φ*₁₁, *φ*₂₁, *ψ*₂₁, *ψ*₃₁, *φ*₂₂, *ψ*₃₂ |
| (3 × 3) | 6 | *φ*₁₁, *φ*₂₁, *ψ*₂₁, *ψ*₃₁, *φ*₂₂, *ψ*₃₂ |
| (4 × 1) | 6 | *φ*₁₁, *φ*₂₁, *φ*₃₁, *ψ*₂₁, *ψ*₃₁, *ψ*₄₁ |
| (4 × 2) | 10 | *φ*₁₁, *φ*₂₁, *φ*₃₁, *ψ*₂₁, *ψ*₃₁, *ψ*₄₁, *φ*₂₂, *φ*₃₂, *ψ*₃₂, *ψ*₄₂ |
| (4 × 3) | 12 | *φ*₁₁, *φ*₂₁, *φ*₃₁, *ψ*₂₁, *ψ*₃₁, *ψ*₄₁, *φ*₂₂, *φ*₃₂, *ψ*₃₂, *ψ*₄₂, *φ*₃₃, *ψ*₄₃ |
| (4 × 4) | 12 | *φ*₁₁, *φ*₂₁, *φ*₃₁, *ψ*₂₁, *ψ*₃₁, *ψ*₄₁, *φ*₂₂, *φ*₃₂, *ψ*₃₂, *ψ*₄₂, *φ*₃₃, *ψ*₄₃ |

An alternative for Table 2, containing the fixed size, may look as follows (indicated as Table 2'), where ${S}_{CB = i}^{\left({N}_{g}\right)}$: denotes the subcarrier set for grouping size ***N_{g}*** and channel bonding factor *CB=i*

**Table 2' - Subcarriers for which a Compressed Beamforming Feedback Matrix subfield is sent back, with DC subcarrier indices dcidx = [-1, 0, 1], when Agreggation field = 0**

| *N_{CB}* | Channel Width | *N_{C}* | Carriers *scidx*(0), *scidx*(1), ... , *scidx*(*N_{C} -* 1) for which matrices are sent. Notation *l_{b}*: *i*: *u_{b}* indicates a vector of integers from lower bound *l_{b}* to upper bound *u_{b}* with a step size of *i*, starting from min{\|*l_{b}*\|, \|*u_{b}*\|}. |
|---|---|---|---|
| 1 | 2.16 | ${N}_{c 1}^{\left({N}_{g}\right)} = \left({k}_{CB 1}+1\right) ⋅ 2$ | ${S}_{CB = 1}^{\left({N}_{g}\right)} = \left[-177,-{N}_{g}{k}_{CB 1}-2:{N}_{g}:-2,2:{N}_{g}:{N}_{g}{k}_{CB 1}+2:177\right]$ |
| 2 | 4.32 | $\begin{matrix}{N}_{c 2}^{\left({N}_{g}\right)} \\ = {N}_{c 1}^{\left({N}_{g}\right)} + 2 \left({k}_{CB 2}+1\right)\end{matrix}$ | ${S}_{CB = 2}^{\left({N}_{g}\right)} = \left[\begin{matrix}- 386 , - {N}_{g} {k}_{CB 2} - 177 : {N}_{g} : - {N}_{g} - 177 , {S}_{CB = 1}^{\left({N}_{g}\right)} , {N}_{g} + \\ 177 : {N}_{g} {k}_{CB 2} + 177 , 386\end{matrix}\right]$ |
| 3 | 6.48 | $\begin{matrix}{N}_{c 3}^{\left({N}_{g}\right)} \\ = {N}_{c 2}^{\left({N}_{g}\right)} + 2 \left({k}_{CB 3}+1\right)\end{matrix}$ | ${S}_{CB = 3}^{\left({N}_{g}\right)} = \left[\begin{matrix}- 596 , - {N}_{g} {k}_{CB 3} - 386 : {N}_{g} : - {N}_{g} - 386 , {S}_{CB = 2}^{\left({N}_{g}\right)} , {N}_{g} + \\ 177 : {N}_{g} {k}_{CB = 3} + 177 , 386\end{matrix}\right]$ |
| 4 | 8.64 | $\begin{matrix}{N}_{c 4}^{\left({N}_{g}\right)} \\ = {N}_{c 3}^{\left({N}_{g}\right)} + 2 \left({k}_{CB 4}+1\right)\end{matrix}$ | ${S}_{CB = 4}^{\left({N}_{g}\right)} = \left[\begin{matrix}805 , - {N}_{g} {k}_{CB 4} - 596 : {N}_{g} : - {N}_{g} - 596 , {S}_{CB = 3}^{\left({N}_{g}\right)} , {N}_{g} + \\ 596 , : {N}_{g} : {N}_{g} {k}_{CB 4} + 596 , 805\end{matrix}\right]$ |

In Table 2' *k*_{*CB*1}, *k*_{*CB*2}, *k*_{*CB*3} *and k*_{*CB*4} represent the largest positive integers such that *N_{g}k*_{*CB*1} *+* 2 < *177, N_{g}k_{CB2}* + 177 < 386, *N_{g}k*_{*CB*3} + 386 < 596 and *N_{g}k*_{*CB*4} *+* 596 < 805, respectively.

When the feedback is for an aggregated channel i.e., 2.16 + 2.16 or 4.32+4.32, the subcarrier indexes are shown in Table 2", where ${S}_{CB = 1}^{\left({N}_{g}\right)} \left(L\right) , {S}_{CB = 1}^{\left({N}_{g}\right)} \left(H\right)$ indicate that the indexes are the ones defined by ${S}_{CB = 1}^{\left({N}_{g}\right)}$ but are applied to the lower and respectively higher 2.16GHz channel. Similarly ${S}_{CB = 2}^{\left({N}_{g}\right)} \left(L\right)$ and ${S}_{CB = 2}^{\left({N}_{g}\right)} \left(H\right)$ indicate that the indexes are the ones defined by ${S}_{CB = 2}^{\left({N}_{g}\right)}$ but are applied to the lower and respectively higher 4.32GHz channel.

**Table 2" - Subcarriers for which a Compressed Beamforming Feedback Matrix subfield is sent back, with DC subcarrier indices dcidx = [-1, 0, 1], when Agreggation field = 1**

| *N_{CB}* | Channel Width | *N_{C}* | Carriers *scidx*(0), *scidx*(1), ... , *scidx*(*N_{C}* - 1) for which matrices are sent. Notation *l_{b}*: *i*: *u_{b}* indicates a vector of integers from lower bound *l_{b}* to upper bound *u_{b}* with a step size of *i*, starting from min{\|*l_{b}*\|, \|*u_{b}*\|}. |
|---|---|---|---|
| 1 | 4.32 | ${N}_{c 2}^{\left({N}_{g}\right)}$ | ${S}_{CA , 1}^{\left({N}_{g}\right)} = \left[{S}_{CB = 1}^{\left({N}_{g}\right)}\left(L\right),{S}_{CB = 1}^{\left({N}_{g}\right)}\left(H\right)\right]$ |
| 2 | 8.64 | ${N}_{c 4}^{\left({N}_{g}\right)}$ | ${S}_{CA , 2}^{\left({N}_{g}\right)} = \left[{S}_{CB = 2}^{\left({N}_{g}\right)}\left(L\right),{S}_{CB = 2}^{\left({N}_{g}\right)}\left(H\right)\right]$ |

Tables 2' and 2" show examples of carrier index sets for the reduced beamforming feedback report, in which the construction starts from center (subcarriers adjacent to DC subcarriers) and goes towards the edges. Similarly the construction can also start from the edges and move towards the center and subset indexes can be inferred in similar manner.

One possible implementation at the receiver for CB=i can be to first consider the reduced set to be ${S}_{CB = i}^{\left({N}_{g}\right)}$ with the largest grouping size and check the error criterion. For adjacent subcarriers, where this is not satisfied consider then subcarrier positions from ${S}_{CB = i}^{\left({N}_{g}-1\right)}$. The procedure will then be repeated iteratively until the error criterion is satisfied for all adjacent subcarriers within the reduced set. By using the fixed subcarrier positions it is easy to decide between fixed and dynamic modes and also to switch between the two when needed, since the subcarrier set for ***N*_{*g*,1}** is always included in that for ***N*_{*g,*2}** if ***N*_{*g,*1}** ≤ ***N*_{*g*,2}**.

The disclosed methods and devices allow to reduce the amount of information that is required to be fed back to the transmitter in order to perform transmit beamforming while maintaining substantially the same performance of the data link. This will increase overall performance (data throughput) of a communication system (such as a smartphone-laptop-client communication with an access point).

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

## Claims

1. A receiving device for use in a wireless OFDM communication system, said receiving device comprising:
- two or more receive antennas for receiving OFDM signals received over a channel from a transmission device having two or more transmit antennas and applying transmit beamforming, and
- circuitry configured to
- perform channel estimation to estimate the channel,
- generate transmit beamforming information based on the channel estimation, said transmit beamforming information comprising beamforming information per subcarrier or time domain tap,
- determine a reduced set of transmit beamforming information from said transmit beamforming information, wherein said reduced set comprises beamforming information for a reduced set of subcarriers in the frequency domain or for a reduced set of taps in the time domain, wherein the subcarriers of said reduced set or the taps of said reduced set are determined based on an error criterion, and
- feed back, to the transmission device, the reduced set of transmit beamforming information, a grouping field and a subcarriers / taps field, wherein the grouping field consists of two bits,
**characterized in that** the highest value of the two bits indicates dynamic grouping in which case the number of subcarriers is specified by the subcarriers / taps field and
wherein each of the other values of the two bits indicates a different number of subcarriers to be grouped into one.

2. The receiving device as claimed in claim 1,
wherein the circuitry is further configured to compress the generated transmit beamforming information and to determine the reduced set of transmit beamforming information from said compressed transmit beamforming information.

3. The receiving device as claimed in claim 2,
wherein the circuitry is further configured to compress at least part of the generated transmit beamforming information by applying a linear quantization or a matrix decomposition, in particular Givens-Rotation or Gauss-Jordan elimination, or by transforming the beamforming information of the generated transmit beamforming information into polar coordinates to obtain compressed transmit beamforming information comprising a beamforming information value per subcarrier or tap.

4. The receiving device as claimed in any preceding claim,
wherein the reduced set of transmit beamforming information comprises a beamforming information value or matrix per subcarrier of said reduced set of subcarriers in the frequency domain or a beamforming information value or matrix per tap of said reduced set of taps in the time domain.

5. The receiving device as claimed in claim 4,
wherein the circuitry is further configured to feed back the reduced set of beamforming information values or matrices and associated subcarrier values or indices indicating their position in the frequency domain or associated tap positions or delays of taps indicating their position or delay in the time domain.

6. The receiving device as claimed in any preceding claim,
wherein the circuitry is further configured to determine the reduced set of transmit beamforming information by one or more of
- differential processing of beamforming information between subcarriers or taps,
- grouping of beamforming information for two or more subcarriers or taps,
- interpolation or regression over groups beamforming information for a fixed or dynamic number of two or more subcarriers or taps, and
- reduction of channel state information in time domain.

7. The receiving device as claimed in any preceding claim,
wherein the circuitry is further configured to determine the reduced set of transmit beamforming information comprising beamforming information for a reduced set of subcarriers in the frequency domain by
- determining, starting with a reduced set of subcarriers containing a single subcarrier, an additional subcarrier, whose associated beamforming information should be included in the reduced set of transmit beamforming information, by computing an accumulated error between approximate beamforming information reconstructed using the reduced set of transmit beamforming information and the complete transmit beamforming information within a subcarrier interval, and
- including the beamforming information or its gradient, associated with said additional subcarrier position or with said subcarrier interval length, in the reduced set of beamforming information if the computed accumulated error exceeds a predetermined error threshold.

8. The receiving device as claimed in claim 7,
wherein the circuitry is further configured to compute the accumulated error by use of approximate beamforming information determined for the subcarriers in a subcarrier interval from the beamforming information associated with said additional subcarrier and the preceding subcarrier of the beamforming interval, in particular wherein the circuitry is further configured to compute the accumulated error by
- determining a distance metric, per subcarrier in the subcarrier interval, between the approximate beamforming information and the beamforming information of the complete transmit beamforming information,
- computing, per subcarrier in the subcarrier interval, the square of the absolute value of said distance metric, and
- summing, for all subcarriers in the subcarrier interval, said squares.

9. The receiving device as claimed in any preceding claim,
wherein the circuitry is further configured to determine the reduced set of transmit beamforming information comprising beamforming information for a reduced set of taps in the time domain by
- determining, starting with a reduced set of taps containing a single tap, an additional tap, whose associated beamforming information should be included in the reduced set of transmit beamforming information, by computing an accumulated error between approximate beamforming information reconstructed using the reduced set of transmit beamforming information and the complete transmit beamforming information within a tap interval, and
- including the beamforming information or its gradient, associated with said additional tap position or with said tap interval length, in the reduced set of beamforming information if the computed accumulated error exceeds a predetermined error threshold.

10. The receiving device as claimed in claim 9,
wherein the circuitry is further configured to compute the accumulated error by use of approximate beamforming information determined for the taps in a tap interval from the beamforming information associated with said additional tap and the preceding tap of the beamforming interval, in particular wherein the circuitry is further configured to compute the accumulated error by
- determining a distance metric, per tap in the tap interval, between the approximate beamforming information and the beamforming information of the complete transmit beamforming information,
- computing, per tap in the tap interval, the square of the absolute value of said distance metric, and
- summing, for all taps in the tap interval, said squares.

11. The receiving device as claimed in any preceding claim,
wherein the circuitry is further configured to determine the reduced set of transmit beamforming information comprising beamforming information for a reduced set of taps in the time domain by
- selecting, by evaluation of an error criterion based on the obtained or estimated channel information in the time domain, taps having the strongest magnitude or a magnitude over a predetermined magnitude threshold,
- computing for each selected channel information beamforming information, and
- including the beamforming information of the selected taps in the reduced set of transmit beamforming information.

12. A receiving method for use in a wireless OFDM communication system, said receiving method comprising:
- receiving OFDM signals received over a channel from a transmission device having two or more transmit antennas and applying transmit beamforming, and
- performing channel estimation to estimate the channel,
- generating transmit beamforming information based on the channel estimation, said transmit beamforming information comprising beamforming information per subcarrier or time domain tap,
- determining a reduced set of transmit beamforming information from said transmit beamforming information, wherein said reduced set comprises beamforming information for a reduced set of subcarriers in the frequency domain or for a reduced set of taps in the time domain, wherein the subcarriers of said reduced set or the taps of said reduced set are determined based on an error criterion, and
- feeding back, to the transmission device, the reduced set of transmit beamforming information, a grouping field and a subcarriers / taps field, wherein the grouping field consists of two bits,
**characterized in that** the highest value of the two bits indicates dynamic grouping in which case the number of subcarriers is specified by the subcarriers / taps field and
wherein each of the other values of the two bits indicates a different number of subcarriers to be grouped into one.

13. A transmission device for use in a wireless OFDM communication system, said transmission device comprising:
- two or more transmit antennas for transmitting OFDM signals over a channel to a receiving device having two or more receive antennas, and
- circuitry configured to
- receive, from the receiving device, a reduced set of transmit beamforming information, a grouping field and a subcarriers / taps field, wherein the grouping field consists of two bits,
wherein the highest value of the two bits indicates dynamic grouping in which case the number of subcarriers is specified by the subcarriers / taps field and
wherein each of the other values of the two bits indicates a different number of subcarriers to be grouped into one, and
wherein said reduced set comprises beamforming information for a reduced set of subcarriers in the frequency domain or for a reduced set of taps in the time domain, wherein the subcarriers of said reduced set or the taps of said reduced set are determined based on an error criterion,
- reconstruct transmit beamforming information from the received reduced set of transmit beamforming information, and
- apply transmit beamforming by use of the reconstructed transmit beamforming information.

14. A transmission method for use in a wireless OFDM communication system, said transmission method comprising:
- transmitting OFDM signals over a channel to a receiving device having two or more receive antennas,
- receiving, from the receiving device, a reduced set of transmit beamforming information, a grouping field and a subcarriers / taps field, wherein the grouping field consists of two bits,
wherein the highest value of the two or more bits indicates dynamic grouping in which case the number of subcarriers is specified by the subcarriers / taps field and
wherein each of the other values of the two or more bits indicates a different number of subcarriers to be grouped into one, and
wherein said reduced set comprises beamforming information for a reduced set of subcarriers in the frequency domain or for a reduced set of taps in the time domain, wherein the subcarriers of said reduced set or the taps of said reduced set are determined based on an error criterion,
- reconstructing transmit beamforming information from the received reduced set of transmit beamforming information, and
- applying transmit beamforming by use of the reconstructed transmit beamforming information.

15. A computer program comprising program code means for causing a computer to perform the steps of said method according to claim 12 or 14 when said computer program is carried out on a computer.

## Patentansprüche

1. Empfangsvorrichtung zur Verwendung in einem drahtlosen OFDM-Kommunikationssystem, die Empfangsvorrichtung umfassend:
- zwei oder mehr Empfangsantennen zum Empfangen von OFDM-Signalen, die über einen Kanal von einer Sendevorrichtung empfangen werden, die zwei oder mehr Sendeantennen aufweist und Sendestrahlformung anwendet, und
- eine Schaltungsanlage, die konfiguriert ist zum
- Durchführen einer Kanalschätzung, um den Kanal zu schätzen,
- Erzeugen von Sendestrahlformungsinformationen basierend auf der Kanalschätzung, die Sendestrahlformungsinformationen umfassend Strahlformungsinformationen pro Hilfsträger oder Zeitbereichsabgriff,
- Bestimmen eines reduzierten Satzes von Sendestrahlformungsinformationen aus den Sendestrahlformungsinformationen, wobei der reduzierte Satz Strahlformungsinformationen für einen reduzierten Satz von Hilfsträgern in dem Frequenzbereich oder für einen reduzierten Satz von Abgriffen in dem Zeitbereich umfasst, wobei die Hilfsträger des reduzierten Satzes oder die Abgriffe des reduzierten Satzes basierend auf einem Fehlerkriterium bestimmt werden, und
- Zurückmelden, an die Sendevorrichtung, des reduzierten Satzes von Sendestrahlformungsinformationen, eines Gruppierungsfelds und eines Hilfsträger-/Abgrifffelds, wobei das Gruppierungsfeld aus zwei Bits besteht, **dadurch gekennzeichnet, dass** der höchste Wert der zwei Bits eine dynamische Gruppierung angibt, in welchem Fall die Anzahl von Hilfsträgern durch das Hilfsträger-/Abgrifffeld spezifiziert wird, und
wobei jeder der anderen Werte der zwei Bits eine unterschiedliche Anzahl von Hilfsträgern angibt, die zu einem zu gruppieren sind.

2. Empfangsvorrichtung nach Anspruch 1,
wobei die Schaltungsanlage ferner konfiguriert ist, um die erzeugten Sendestrahlformungsinformationen zu komprimieren und um den reduzierten Satz von Sendestrahlformungsinformationen aus den komprimierten Sendestrahlformungsinformationen zu bestimmen.

3. Empfangsvorrichtung nach Anspruch 2,
wobei die Schaltungsanlage ferner konfiguriert ist, um mindestens einen Teil der erzeugten Sendestrahlformungsinformationen durch Anwenden einer linearen Quantisierung oder einer Matrixzersetzung, insbesondere einer Givens-Rotation oder Gauß-Jordan-Elimination, oder durch Transformieren der Strahlformungsinformationen der erzeugten Sendstrahlformungsinformationen in Polarkoordinaten zu komprimieren, um komprimierte Sendestrahlformungsinformationen zu erhalten, umfassend einen Strahlformungsinformationswert pro Hilfsträger oder Abgriff.

4. Empfangsvorrichtung nach einem der vorstehenden Ansprüche,
wobei der reduzierte Satz von Sendestrahlformungsinformationen einen Strahlformungsinformationswert oder eine Strahlformungsinformationsmatrix pro Hilfsträger des reduzierten Satzes von Hilfsträgern in dem Frequenzbereich oder einen Strahlformungsinformationswert oder eine Strahlformungsinformationsmatrix pro Abgriff des reduzierten Satzes von Abgriffen in dem Zeitbereich umfasst.

5. Empfangsvorrichtung nach Anspruch 4,
wobei die Schaltungsanlage ferner konfiguriert ist, um den reduzierten Satz von Strahlformungsinformationswerten oder -matrizen und zugeordnete Subträgerwerte oder -indizes, die ihre Position in dem Frequenzbereich angeben, oder zugeordnete Abgriffpositionen oder Verzögerungen von Abgriffen, die ihre Position oder Verzögerung in dem Zeitbereich angeben, zurückzumelden.

6. Empfangsvorrichtung nach einem der vorstehenden Ansprüche,
wobei die Schaltungsanlage ferner konfiguriert ist, um den reduzierten Satz von Sendestrahlformungsinformationen zu bestimmen durch eines oder mehrere von
- differenziellem Verarbeiten von Strahlformungsinformationen zwischen Hilfsträgern oder Abgriffen,
- Gruppieren von Strahlformungsinformationen für zwei oder mehr Hilfsträger oder Abgriffe,
- Interpolation oder Regression über Gruppen von Strahlformungsinformationen für eine feste oder dynamische Anzahl von zwei oder mehr Hilfsträgern oder Abgriffen, und
- Reduzierung von Kanalzustandsinformationen in dem Zeitbereich.

7. Empfangsvorrichtung nach einem der vorstehenden Ansprüche,
wobei die Schaltungsanlage ferner konfiguriert ist, um den reduzierten Satz von Sendestrahlformungsinformationen, umfassend Strahlformungsinformationen für einen reduzierten Satz von Hilfsträgern in dem Frequenzbereich, zu bestimmen durch
- Bestimmen, beginnend mit einem reduzierten Satz von Hilfsträgern, der einen einzelnen Hilfsträger enthält, eines zusätzlichen Hilfsträgers, dessen zugeordnete Strahlformungsinformationen in den reduzierten Satz von Sendestrahlformungsinformationen aufgenommen werden sollen, durch Berechnen eines akkumulierten Fehlers zwischen genäherten Strahlformungsinformationen, die unter Verwendung des reduzierten Satzes von Sendestrahlformungsinformationen rekonstruiert werden, und den vollständigen Sendestrahlformungsinformationen innerhalb eines Hilfsträgerintervalls, und
- Aufnehmen der Strahlformungsinformationen oder ihres Gradienten, die der zusätzlichen Hilfsträgerposition oder mit der Hilfsträgerintervalllänge zugeordnet sind, in den reduzierten Satz von Strahlformungsinformationen, falls der berechnete akkumulierte Fehler einen vorbestimmten Fehlerschwellenwert überschreitet.

8. Empfangsvorrichtung nach Anspruch 7,
wobei die Schaltungsanlage ferner konfiguriert ist, um den akkumulierten Fehler durch Verwenden von genäherten Strahlformungsinformationen zu berechnen, die für die Hilfsträger in einem Hilfsträgerintervall aus den Strahlformungsinformationen bestimmt werden, die dem zusätzlichen Hilfsträger und dem vorstehenden Hilfsträger des Strahlformungsintervalls zugeordnet sind, insbesondere wobei die Schaltungsanlage ferner konfiguriert ist, um den akkumulierten Fehler zu berechnen durch
- Bestimmen einer Abstandsmetrik, pro Hilfsträger in dem Hilfsträgerintervall, zwischen der ungefähren Strahlformungsinformationen und der Strahlformungsinformationen der vollständigen Sendestrahlformungsinformationen,
- Berechnen, pro Hilfsträger in dem Hilfsträgerintervall, des Quadrats des absoluten Werts der Abstandsmetrik, und
- Summieren der Quadrate für alle Hilfsträger in dem Hilfsträgerintervall.

9. Empfangsvorrichtung nach einem der vorstehenden Ansprüche,
wobei die Schaltungsanlage ferner konfiguriert ist, um den reduzierten Satz von Sendestrahlformungsinformationen, umfassend Strahlformungsinformationen für einen reduzierten Satz von Abgriffen in dem Zeitbereich, zu bestimmen durch
- Bestimmen, beginnend mit einem reduzierten Satz von Abgriffen, der einen einzelnen Abgriff enthält, eines zusätzlichen Abgriffs, dessen zugeordnete Strahlformungsinformationen in den reduzierten Satz von Sendestrahlformungsinformationen aufgenommen werden sollen, durch Berechnen eines akkumulierten Fehlers zwischen genäherten Strahlformungsinformationen, die unter Verwendung des reduzierten Satzes von Sendestrahlformungsinformationen rekonstruiert werden, und den vollständigen Sendestrahlformungsinformationen innerhalb eines Abgriffintervalls, und
- Aufnehmen der Strahlformungsinformationen oder ihres Gradienten, die der zusätzlichen Abgriffposition oder der Abgriffintervalllänge zugeordnet sind, in den reduzierten Satz von Strahlformungsinformationen, falls der berechnete akkumulierte Fehler einen vorbestimmten Fehlerschwellenwert überschreitet.

10. Empfangsvorrichtung nach Anspruch 9,
wobei die Schaltungsanlage ferner konfiguriert ist, um den akkumulierten Fehler durch Verwenden von genäherten Strahlformungsinformationen zu berechnen, die für die Abgriffe in einem Abgriffintervall aus den Strahlformungsinformationen bestimmt werden, die dem zusätzlichen Abgriff und dem vorstehenden Abgriff des Strahlformungsintervalls zugeordnet sind, insbesondere wobei die Schaltungsanlage ferner konfiguriert ist, den akkumulierten Fehler zu berechnen durch
- Bestimmen einer Abstandsmetrik, pro Abgriff in dem Abgriffintervall, zwischen den genäherten Strahlformungsinformationen und den Strahlformungsinformationen der vollständigen Sendestrahlformungsinformationen,
- Berechnen, pro Abgriff in dem Abgriffintervall, des Quadrats des absoluten Werts der Abstandsmetrik, und
- Summieren, für alle Abgriffe in dem Abgriffintervall, der Quadrate.

11. Empfangsvorrichtung nach einem der vorstehenden Ansprüche,
wobei die Schaltungsanlage ferner konfiguriert ist, um den reduzierten Satz von Sendestrahlformungsinformationen, umfassend Strahlformungsinformationen für einen reduzierten Satz von Abgriffen in dem Zeitbereich, zu bestimmen durch
- Auswählen, durch Auswertung eines Fehlerkriteriums basierend auf den erhaltenen oder geschätzten Kanalinformationen in dem Zeitbereich, von Abgriffen, die den stärksten Betrag oder einem Betrag über einem vorbestimmten Betragsschwellenwert aufweisen,
- Berechnen von Strahlformungsinformationen für jede ausgewählten Kanalinformationen, und
- Aufnehmen der Strahlformungsinformationen der ausgewählten Abgriffe in dem reduzierten Satz von Sendestrahlformungsinformationen.

12. Empfangsverfahren zur Verwendung in einem drahtlosen OFDM-Kommunikationssystem, das Empfangsverfahren umfassend:
- Empfangen von OFDM-Signalen, die über einen Kanal von einer Sendevorrichtung empfangen werden, die zwei oder mehr Sendeantennen aufweist und Sendestrahlformung anwendet, und
- Durchführen der Kanalschätzung, um den Kanal zu schätzen,
- Erzeugen von Sendestrahlformungsinformationen basierend auf der Kanalschätzung, die Sendestrahlformungsinformationen umfassend Strahlformungsinformationen pro Hilfsträger oder Zeitbereichsabgriff,
- Bestimmen eines reduzierten Satzes von Sendestrahlformungsinformationen aus den Sendestrahlformungsinformationen, wobei der reduzierte Satz Strahlformungsinformationen für einen reduzierten Satz von Hilfsträgern in dem Frequenzbereich oder für einen reduzierten Satz von Abgriffen in dem Zeitbereich umfasst, wobei die Hilfsträger des reduzierten Satzes oder die Abgriffe des reduzierten Satzes basierend auf einem Fehlerkriterium bestimmt werden, und
- Rückmelden, an die Sendevorrichtung, des reduzierten Satzes von Sendestrahlformungsinformationen, eines Gruppierungsfelds und eines Hilfsträger-/Abgrifffelds, wobei das Gruppierungsfeld aus zwei Bits besteht, **dadurch gekennzeichnet, dass** der höchste Wert der zwei Bits eine dynamische Gruppierung angibt, in welchem Fall die Anzahl von Hilfsträgern durch das Hilfsträger-/Abgrifffeld spezifiziert wird, und
wobei jeder der anderen Werte der zwei Bits eine unterschiedliche Anzahl von Hilfsträgern angibt, die zu einem zu gruppieren sind.

13. Sendevorrichtung zur Verwendung in einem drahtlosen OFDM-Kommunikationssystem, die Sendevorrichtung umfassend:
- zwei oder mehr Sendeantennen zum Senden von OFDM-Signalen über einen Kanal an eine Empfangsvorrichtung, die zwei oder mehr Empfangsantennen aufweist, und
- die Schaltungsanlage, die konfiguriert ist zum
- Empfangen, von der Empfangsvorrichtung, eines reduzierten Satzes von Sendestrahlformungsinformationen, eines Gruppierungsfelds und eines Hilfsträger-/Abgrifffelds, wobei das Gruppierungsfeld aus zwei Bits besteht,
wobei der höchste Wert der zwei Bits eine dynamische Gruppierung angibt, in welchem Fall die Anzahl der Hilfsträger durch das Hilfsträger-/Abgrifffeld spezifiziert wird und
wobei jeder der anderen Werte der zwei Bits eine unterschiedliche Anzahl von Hilfsträgern angibt, die zu einem zu gruppieren sind, und
wobei der reduzierte Satz Strahlformungsinformationen für einen reduzierten Satz von Hilfsträgern in dem Frequenzbereich oder für einen reduzierten Satz von Abgriffen in dem Zeitbereich umfasst, wobei die Hilfsträger des reduzierten Satzes oder die Abgriffe des reduzierten Satzes basierend auf einem Fehlerkriterium bestimmt werden,
- Rekonstruieren der Sendestrahlformungsinformationen aus dem empfangenen reduzierten Satz von Sendestrahlformungsinformationen, und
- Anwenden der Sendestrahlformung durch Verwenden der rekonstruierten Sendestrahlformungsinformationen.

14. Sendungsverfahren zur Verwendung in einem drahtlosen OFDM-Kommunikationssystem, das Sendungsverfahren umfassend:
- Senden von OFDM-Signalen über einen Kanal an eine Empfangsvorrichtung, die zwei oder mehr Empfangsantennen aufweist,
- Empfangen, von der Empfangsvorrichtung, eines reduzierten Satzes von Sendestrahlformungsinformationen, eines Gruppierungsfelds und eines Hilfsträger-/Abgrifffelds, wobei das Gruppierungsfeld aus zwei Bits besteht,
wobei der höchste Wert der zwei oder mehr Bits die dynamische Gruppierung angibt, in welchem Fall die Anzahl der Hilfsträger durch das Hilfsträger-/Abgrifffeld spezifiziert wird, und
wobei jeder der anderen Werte der zwei oder mehr Bits eine unterschiedliche Anzahl von Hilfsträgern angibt, die zu einem zu gruppieren sind, und
wobei der reduzierte Satz Strahlformungsinformationen für einen reduzierten Satz von Hilfsträgern in dem Frequenzbereich oder für einen reduzierten Satz von Abgriffen in dem Zeitbereich umfasst, wobei die Hilfsträger des reduzierten Satzes oder die Abgriffe des reduzierten Satzes basierend auf einem Fehlerkriterium bestimmt werden,
- Rekonstruieren von Sendestrahlformungsinformationen aus dem empfangenen reduzierten Satz von Sendestrahlformungsinformationen, und
- Anwenden von Sendestrahlformung durch Verwenden der rekonstruierten Sendestrahlformungsinformationen.

15. Computerprogramm, umfassend Programmcodemittel zum Veranlassen eines Computer, die Schritte des Verfahrens nach Anspruch 12 oder 14 durchzuführen, wenn das Computerprogramm auf einem Computer ausgeführt wird.

## Revendications

1. Dispositif de réception destiné à être utilisé dans un système de communication OFDM sans fil, ledit dispositif de réception comprenant :
- deux antennes de réception ou plus destinées à recevoir des signaux OFDM reçus sur un canal en provenance d'un dispositif de transmission ayant deux antennes d'émission ou plus et à appliquer une formation de faisceau d'émission, et
- un circuit configuré pour
- réaliser une estimation de canal pour estimer le canal,
- générer des informations de formation de faisceau d'émission sur la base de l'estimation de canal, lesdites informations de formation de faisceau d'émission comprenant des informations de formation de faisceau par sous-porteuse ou prise de domaine temporel,
- déterminer un ensemble réduit d'informations de formation de faisceau d'émission à partir desdites informations de formation de faisceau d'émission, dans lequel ledit ensemble réduit comprend des informations de formation de faisceau pour un ensemble réduit de sous-porteuses dans le domaine fréquentiel ou pour un ensemble réduit de prises dans le domaine temporel, dans lequel les sous-porteuses dudit ensemble réduit ou les prises dudit ensemble réduit sont déterminées sur la base d'un critère d'erreur, et
- renvoyer, au dispositif de transmission, l'ensemble réduit d'informations de formation de faisceau d'émission, un champ de regroupement et un champ de sous-porteuses / prises, dans lequel le champ de regroupement est constitué de deux bits, **caractérisé en ce que** la valeur la plus élevée des deux bits indique un regroupement dynamique auquel cas le nombre de sous-porteuses est spécifié par le champ de sous-porteuses / prises et
dans lequel chacune des autres valeurs des deux bits indique un nombre différent de sous-porteuses à regrouper en une seule.

2. Dispositif de réception selon la revendication 1,
dans lequel le circuit est en outre configuré pour compresser les informations de formation de faisceau d'émission générées et pour déterminer l'ensemble réduit d'informations de formation de faisceau d'émission à partir desdites informations de formation de faisceau d'émission compressées.

3. Dispositif de réception selon la revendication 2,
dans lequel le circuit est en outre configuré pour compresser au moins une partie des informations de formation de faisceau d'émission générées en appliquant une quantification linéaire ou une décomposition matricielle, en particulier une rotation de Givens ou une élimination de Gauss-Jordan, ou en transformant les informations de formation de faisceau des informations de formation de faisceau d'émission générées en coordonnées polaires pour obtenir des informations de formation de faisceau d'émission compressées comprenant une valeur d'informations de formation de faisceau par sous-porteuse ou prise.

4. Dispositif de réception selon l'une quelconque revendication précédente,
dans lequel l'ensemble réduit d'informations de formation de faisceau d'émission comprend une valeur ou matrice d'informations de formation de faisceau par sous-porteuse dudit ensemble réduit de sous-porteuses dans le domaine fréquentiel ou une valeur ou matrice d'informations de formation de faisceau par prise dudit ensemble réduit de prises dans le domaine temporel.

5. Dispositif de réception selon la revendication 4,
dans lequel le circuit est en outre configuré pour renvoyer l'ensemble réduit de valeurs ou matrices d'informations de formation de faisceau et de valeurs ou d'indices de sous-porteuse associés indiquant leur position dans le domaine fréquentiel ou de positions de prise ou de retards de prises associés indiquant leur position ou retard dans le domaine temporel.

6. Dispositif de réception selon l'une quelconque revendication précédente,
dans lequel le circuit est en outre configuré pour déterminer l'ensemble réduit d'informations de formation de faisceau d'émission par un ou plusieurs parmi
- un traitement différentiel d'informations de formation de faisceau entre des sous-porteuses ou des prises,
- un regroupement d'informations de formation de faisceau pour deux sous-porteuses ou prises ou plus,
- une interpolation ou une régression sur des groupes d'informations de formation de faisceau pour un nombre fixe ou dynamique de deux sous-porteuses ou prises ou plus, et
- une réduction des informations d'état de canal dans le domaine temporel.

7. Dispositif de réception selon l'une quelconque revendication précédente,
dans lequel le circuit est en outre configuré pour déterminer l'ensemble réduit d'informations de formation de faisceau d'émission comprenant des informations de formation de faisceau pour un ensemble réduit de sous-porteuses dans le domaine fréquentiel par
- la détermination, en commençant par un ensemble réduit de sous-porteuses contenant une seule sous-porteuse, d'une sous-porteuse supplémentaire, dont les informations de formation de faisceau associées doivent être incluses dans l'ensemble réduit d'informations de formation de faisceau d'émission, en calculant une erreur cumulée entre des informations de formation de faisceau approximatives reconstruites au moyen de l'ensemble réduit d'informations de formation de faisceau d'émission et les informations de formation de faisceau d'émission complètes dans un intervalle de sous-porteuses, et
- l'inclusion des informations de formation de faisceau ou de leur gradient, associées à ladite position de sous-porteuse supplémentaire ou à ladite longueur d'intervalle de sous-porteuses, dans l'ensemble réduit d'informations de formation de faisceau si l'erreur cumulée calculée dépasse un seuil d'erreur prédéfini.

8. Dispositif de réception selon la revendication 7,
dans lequel le circuit est en outre configuré pour calculer l'erreur cumulée au moyen d'informations de formation de faisceau approximatives déterminées pour les sous-porteuses dans un intervalle de sous-porteuses à partir des informations de formation de faisceau associées à ladite sous-porteuse supplémentaire et à la sous-porteuse précédente de l'intervalle de formation de faisceau, en particulier dans lequel le circuit est en outre configuré pour calculer l'erreur cumulée par
- la détermination d'une mesure de distance, par sous-porteuse dans l'intervalle de sous-porteuses, entre les informations de formation de faisceau approximatives et les informations de formation de faisceau des informations de formation de faisceau d'émission complètes,
- le calcul, par sous-porteuse dans l'intervalle de sous-porteuses, du carré de la valeur absolue de ladite mesure de distance, et
- la sommation, pour toutes les sous-porteuses dans l'intervalle de sous-porteuses, desdits carrés.

9. Dispositif de réception selon l'une quelconque revendication précédente,
dans lequel le circuit est en outre configuré pour déterminer l'ensemble réduit d'informations de formation de faisceau d'émission comprenant des informations de formation de faisceau pour un ensemble réduit de prises dans le domaine temporel par
- la détermination, en commençant par un ensemble réduit de prises contenant une seule prise, d'une prise supplémentaire, dont les informations de formation de faisceau associées doivent être incluses dans l'ensemble réduit d'informations de formation de faisceau d'émission, en calculant une erreur cumulée entre des informations de formation de faisceau approximatives reconstruites à l'aide de l'ensemble réduit d'informations de formation de faisceau d'émission et les informations de formation de faisceau d'émission complètes dans un intervalle de prises, et
- l'inclusion des informations de formation de faisceau ou de leur gradient, associées à ladite position de prise supplémentaire ou à ladite longueur d'intervalle de prises, dans l'ensemble réduit d'informations de formation de faisceau si l'erreur cumulée calculée dépasse un seuil d'erreur prédéfini.

10. Dispositif de réception selon la revendication 9,
dans lequel le circuit est en outre configuré pour calculer l'erreur cumulée au moyen d'informations de formation de faisceau approximatives déterminées pour les prises dans un intervalle de prises à partir des informations de formation de faisceau associées à ladite prise supplémentaire et à la prise précédente de l'intervalle de formation de faisceau, en particulier dans lequel le circuit est en outre configuré pour calculer l'erreur cumulée par
- la détermination d'une mesure de distance, par prise dans l'intervalle de prises, entre les informations de formation de faisceau approximatives et les informations de formation de faisceau des informations de formation de faisceau d'émission complètes,
- le calcul, par prise dans l'intervalle de prises, du carré de la valeur absolue de ladite mesure de distance, et
- la sommation, pour toutes les prises dans l'intervalle de prises, desdits carrés.

11. Dispositif de réception selon l'une quelconque revendication précédente,
dans lequel le circuit est en outre configuré pour déterminer l'ensemble réduit d'informations de formation de faisceau d'émission comprenant des informations de formation de faisceau pour un ensemble réduit de prises dans le domaine temporel par
- la sélection, par évaluation d'un critère d'erreur basé sur les informations de canal obtenues ou estimées dans le domaine temporel, de prises ayant la plus forte amplitude ou une amplitude supérieure à un seuil d'amplitude prédéfini,
- le calcul, pour chaque information de canal sélectionnée, d'informations de formation de faisceau, et
- l'inclusion des informations de formation de faisceau des prises sélectionnées dans l'ensemble réduit d'informations de formation de faisceau d'émission.

12. Procédé de réception destiné à être utilisé dans un système de communication OFDM sans fil, ledit procédé de réception comprenant :
- la réception de signaux OFDM reçus sur un canal en provenance d'un dispositif de transmission comportant deux antennes d'émission ou plus et l'application d'une formation de faisceau d'émission, et
- la réalisation d'une estimation de canal pour estimer le canal,
- la génération d'informations de formation de faisceau d'émission sur la base de l'estimation de canal, lesdites informations de formation de faisceau d'émission comprenant des informations de formation de faisceau par sous-porteuse ou prise de domaine temporel,
- la détermination d'un ensemble réduit d'informations de formation de faisceau d'émission à partir desdites informations de formation de faisceau d'émission, dans lequel ledit ensemble réduit comprend des informations de formation de faisceau pour un ensemble réduit de sous-porteuses dans le domaine fréquentiel ou pour un ensemble réduit de prises dans le domaine temporel, dans lequel les sous-porteuses dudit ensemble réduit ou les prises dudit ensemble réduit sont déterminées sur la base d'un critère d'erreur, et
- le renvoi, au dispositif de transmission, de l'ensemble réduit d'informations de formation de faisceau d'émission, d'un champ de regroupement et d'un champ de sous-porteuses / prises, dans lequel le champ de regroupement est constitué de deux bits, **caractérisé en ce que** la valeur la plus élevée des deux bits indique un regroupement dynamique, auquel cas le nombre de sous-porteuses est spécifié par le champ de sous-porteuses / prises et
dans lequel chacune des autres valeurs des deux bits indique un nombre différent de sous-porteuses à regrouper en une seule.

13. Dispositif de transmission destiné à être utilisé dans un système de communication OFDM sans fil, ledit dispositif de transmission comprenant :
- deux antennes d'émission ou plus pour émettre des signaux OFDM sur un canal vers un dispositif de réception comportant deux antennes de réception ou plus, et
- un circuit configuré pour
- recevoir, en provenance du dispositif de réception, un ensemble réduit d'informations de formation de faisceau d'émission, un champ de regroupement et un champ de sous-porteuses / prises, dans lequel le champ de regroupement est constitué de deux bits,
dans lequel la valeur la plus élevée des deux bits indique un regroupement dynamique, auquel cas le nombre de sous-porteuses est spécifié par le champ de sous-porteuses / prises et
dans lequel chacune des autres valeurs des deux bits indique un nombre différent de sous-porteuses à regrouper en une seule, et
dans lequel ledit ensemble réduit comprend des informations de formation de faisceau pour un ensemble réduit de sous-porteuses dans le domaine fréquentiel ou pour un ensemble réduit de prises dans le domaine temporel, dans lequel les sous-porteuses dudit ensemble réduit ou les prises dudit ensemble réduit sont déterminées sur la base d'un critère d'erreur,
- reconstruire des informations de formation de faisceau d'émission à partir de l'ensemble réduit reçu d'informations de formation de faisceau d'émission, et
- appliquer une formation de faisceau d'émission au moyen des informations de formation de faisceau d'émission reconstruites.

14. Procédé de transmission destiné à être utilisé dans un système de communication OFDM sans fil, ledit procédé de transmission comprenant :
- la transmission de signaux OFDM sur un canal à un dispositif de réception comportant deux antennes de réception ou plus,
- la réception, en provenance du dispositif de réception, d'un ensemble réduit d'informations de formation de faisceau d'émission, d'un champ de regroupement et d'un champ de sous-porteuses / prises, dans lequel le champ de regroupement est constitué de deux bits,
dans lequel la valeur la plus élevée des deux bits ou plus indique un regroupement dynamique, auquel cas le nombre de sous-porteuses est spécifié par le champ de sous-porteuses / prises et
dans lequel chacune des autres valeurs des deux bits ou plus indique un nombre différent de sous-porteuses à regrouper en une seule, et
dans lequel ledit ensemble réduit comprend des informations de formation de faisceau pour un ensemble réduit de sous-porteuses dans le domaine fréquentiel ou pour un ensemble réduit de prises dans le domaine temporel, dans lequel les sous-porteuses dudit ensemble réduit ou les prises dudit ensemble réduit sont déterminées sur la base d'un critère d'erreur,
- la reconstruction d'informations de formation de faisceau d'émission à partir de l'ensemble réduit reçu d'informations de formation de faisceau d'émission, et
- l'application de la formation de faisceau d'émission au moyen des informations de formation de faisceau d'émission reconstruites.

15. Programme informatique comprenant un moyen de code de programme permettant d'amener un ordinateur à réaliser les étapes dudit procédé selon la revendication 12 ou 14 lorsque ledit programme informatique est exécuté sur un ordinateur.
